# NEUE EUROPÄISCHE PATENTSCHRIFT

(11) **EP 2 277 738 B2**
(45) Veröffentlichungstag und Bekanntmachung des Hinweises auf die Entscheidung über den Einspruch: **17.08.2016**
(45) Hinweis auf die Patenterteilung: 05.09.2012
(21) Anmeldenummer: 10007438.4
(22) Anmeldetag: 19.07.2010
(51) Int. Cl.: B60P 1/44

(54) **Hubladebühne**
Cantilever lift
Plateforme de chargement par levage

(30) Priorität: 21.07.2009 DE 102009034282
(43) Veröffentlichungstag der Anmeldung: 26.01.2011
(73) Patentinhaber: MBB Palfinger GmbH, 27777 Ganderkesee (DE)
(72) Erfinder: Zimmermann, Martin, 27711 Osterholz-Scharmbeck (DE)
(74) Vertreter: Möller, Friedrich

(56) Entgegenhaltungen:
- DE-A1- 3 027 646
- DE-U1- 8 910 845
- DE-U1- 29 608 839
- DE-U1-202004 014 891
- DE-U1-202008 011 397

## Beschreibung

Die Erfindung betrifft eine Hubladebühne mit Ladeplattform gemäß dem Oberbegriff des Anspruchs 1. Daneben betrifft die Erfindung ein Fahrzeug mit einer Hubladebühne gemaß dem Oberbegriff des Anspruchs 11.

Lastkraftwagen für die Beförderung temperaturempfindlicher Güter weisen einen isolierten Frachtraum oder Laderaum auf. Insbesondere im Bereich einer heckseitigen Öffnung kann eine Hubladebühne vorgesehen sein. Die heckseitige Öffnung ist entweder durch isolierende Türen verschließbar. Alternativ kann eine Ladeplattform der Hubladebühne isoliert sein und die Fahrzeugöffnung verschließen. Aus praktischen Gründen soll die Ladeplattform eine möglichst geringe Dicke aufweisen. Zugleich sind eine hohe mechanische Belastbarkeit der Ladeplattform durch darüber fahrende Rollwagen und eine möglichst gute Isolierwirkung gefordert.

Aus der DE 296 08 839 U1 ist eine Hubladebühne mit einer Ladeplattform bekannt, die zwei Schichten mit Hohlräumen aufweist, welche mit einem thermoisolierenden Material gefüllt sind. Vor allem dadurch, dass die Hohlräume in zwei Schichten angeordnet sind, verfügt die auf diese Weise isolierte Ladeplattform über ein recht großes Volumen.

Aus der DE 20 2008 011 397 ist eine Hubladebühne bekannt, die über eine Ladeplattform mit einer außen liegenden Wärmedämmung an ihrer Rückseite verfügt. Diese außen liegende Wärmedämmung erfordert eine zusätzliche Deckplatte an der Rückseite bzw. Unterseite der Ladeplattform.

Aufgabe der vorliegenden Erfindung ist die Schaffung einer Hubladebühne mit Ladeplattform, welche die oben genannten Anforderungen so gut wie möglich erfüllt.

Eine erfindungsgemäße Hubladebühne weist die Merkmale des Anspruchs 1 auf. Tragstruktur und Deckschicht beziehen sich insbesondere auf die herkömmliche Gestaltung einer Ladeplattform ohne Isolierung und sind im weitesten Sinne zu verstehen. Die Tragstruktur enthält die zur Stabilität der Ladeplattform erforderlichen Bauteile und Wandungen und weist den typischen, spitz zulaufenden Querschnitt einer Ladeplattform auf. Auf der Tragstruktur angeordnet ist die Deckschicht als stabiler Deckbelag, auf dem die Lasten, Waren oder dergleichen beim Be- und Entladen des Lastkraftwagens hin- und hergefahren werden. Die Deckschicht soll deshalb stabil und abriebfest sein. Üblicherweise ist die Deckschicht als Deckblech ausgeführt. Zwischen der Tragstruktur und der Deckschicht ist eine Isolierschicht vorgesehen. Das heißt, die Deckschicht liegt nicht wie sonst auf der Tragstruktur oder schließt diese nach oben ab, sondern auf der Tragstruktur liegt zunächst die Isolierschicht und dann die Deckschicht. Dadurch ist es möglich, Tragstruktur und Deckschicht thermisch voneinander zu entkoppeln. Nach dem Verschließen der Fahrzeugöffnung durch die Ladeplattform kann beispielsweise Kälte aus dem Laderaum zwar an die Deckschicht gelangen, nicht jedoch zur Tragstruktur. In der Isolierschicht ist ein Vakuumisoliermaterial vorgesehen. Dieses ist vorzugsweise poröses Material, welches evakuiert wurde. Besonders vorteilhaft ist die Verwendung von mikroporösem Material, welches in Folie verpackt und evakuiert wurde. Das Vakuumisoliermaterial ist vorteilhafterweise verfestigt. Das umhüllte Isoliermaterial erhält so eine Plattenform. Die Platten können leicht auf die Tragstruktur der Ladeplattform aufgelegt werden und weisen sogar eine Eigenstabilität auf. Je höher die Eigenstabilität ist, um so dünner kann die Deckschicht ausgebildet werden. Das Vakuumisoliermaterial ist besonders vorteilhaft, weil die Wärmeleitfähigkeit wesentlich geringer ist als bei herkömmlichen Isoliermaterialien wie beispielsweise Mineralfasern oder Schaumstoffen. Möglich ist eine Wärmeleitfähigkeit von 0,01 bis 0,605 W/mK oder weniger. Die Isolierschicht ist umlaufend von einem Randprofil umgeben. Das Randprofil weist eine geringere Wärmeleitfähigkeit als die Deckschicht und die Tragstruktur auf.

Tragstruktur und/oder Deckschicht sind vorzugsweise aus Metall hergestellt, insbesondere aus Aluminium. Angestrebt ist eine deutlich schlechtere Wärmeleitung für das Randprofil, sodass randseitig an die Isolierschicht nicht unmittelbar gute Wärmeleiter anschließen. Das Randprofil liegt bei geschlossener Ladeplattform vorzugsweise an einer fahrzeugseitigen Dichtung an.

Vorteilhafterweise besteht das Randprofil aus Kunststoff. Insbesondere ist ein abriebfester und stabiler Hartkunststoff vorgesehen, etwa aus Polyamid oder Polyethylen. Das Randprofil liegt teilweise frei und ist insoweit auch mechanischen Belastungen beim Be-und Entladen der Güter ausgesetzt.

Vorteilhafterweise überdeckt die Deckschicht die Isolierschicht vollständig. Die Isolierschicht ist dadurch vollflächig gegen mechanische Beanspruchungen geschützt.

Nach einem weiteren Gedanken der Erfindung überdeckt die Deckschicht das Randprofil nicht oder nur teilweise. Vorzugsweise erstreckt sich die Deckschicht vollständig über die Isolierschicht und nur teilweise über das Randprofil. Dadurch werden Wärmebrücken (oder Kältebrücken) zwischen der Deckschicht und der Tragstruktur wirksam vermieden.

Erfindungsgemäß kann die Deckschicht mit dem Randprofil verklebt oder verschraubt sein oder auf andere Weise dauerhaft oder lösbar mit dem Randprofil verbunden sein.

Nach einem weiteren Gedanken der Erfindung bildet die Tragstruktur eine Wanne, in oder auf der das Randprofil, die Isolierschicht und die Deckschicht liegen. Dies erleichtert die Integration und Verbindung der genannten Teile miteinander.

Erfindungsgemäß kann das Randprofil zumindest einseitig formschlüssig an einer Seitenwand der Tragstruktur gehalten sein. Randprofil und Seitenwand weisen miteinander korrespondierende Vorsprünge und Hinterschneidungen auf zur Erzielung eines Forrrischlusses. So kann das leicht flexible Randprofil in die Tragstruktur eingesetzt und anschließend die Isolierschicht in den durch das Randprofil gebildeten Rahmen eingelegt und beispielsweise eingeklebt werden.

Vorteilhafterweise liegt das Randprofil außenseitig an einer insbesondere umlaufenden Seitenwand der Tragstruktur an: Dadurch ergibt sich ein Stützeffekt für das Randprofil.

Erfindungsgemäß kann das Randprofil mit der Tragschicht verklebt oder verschraubt oder auf andere Weise dauerhaft oder lösbar verbunden sein. Diese Verbindungsarten können zusätzlich oder alternativ zu der oben genannten formschlüssigen Verbindung mit der Seitenwand der Tragstruktur vorgesehen sein.

Nach einem weiteren Gedanken der Erfindung erstreckt sich die Isolierschicht über mehr als 80% der Fläche der Ladeplattform, insbesondere über etwa 95%. Entsprechend groß kann die fahrzeugseitige Öffnung ausgebildet sein bei vollständiger Isolierung der Öffnung.

Vorteilhafterweise weist die Tragstruktur zueinander parallele Verstärkungsprofile auf, welche sich insbesondere quer zu einer Schwenkachse der Ladeplattform erstrecken. Ziel ist die Ausbildung einer stabilen Tragstruktur bis hin zu einer im Querschnitt spitz zulaufenden Ladekante.

Bestandteil der Erfindung ist auch ein Fahrzeug mit einer Hubladebühne mit den Merkmalen des Anspruchs 11, wobei eine insbesondere heckseitige Fahrzeugöffnung eine umlaufende Dichtung aufweist, an welcher das Randprofil der geschlossenen Ladeplattform anliegt. Ein solches Fahrzeug weist vorzugsweise keine isolierenden Türen im Bereich der Fahrzeugöffnung auf. Die Fahrzeugöffnung wird allein durch die Ladeplattform verschlossen.

Möglich ist die Anordnung einer oberen Gegenklappe in der Fahrzeugöffnung. Die Gegenklappe sichert eine feste Anlage der Ladeplatform am Rahmen der Fahrzeugöffnung und kann selbst aufschwenkbar sein. Vorzugsweise ist aber nur ein starres Gegenbrett anstelle einer Gegenklappe vorgesehen. Die geschlossene Ladeplattform liegt mit einem oberen Rand am Gegenbrett ah oder hakt hinter das Gegenbrett oder entsprechende Haltemittel am Gegenbrett.

Weitere Merkmale der Erfindung ergeben sich aus der Beschreibung im Übrigen und aus den Änsprüchen.

Vorteilhafte Ausführungsformen der Erfindung werden nachfolgend anhand von Zeichnungen näher erläutert. Es zeigen:
- Fig. 1: eine perspektivische Draufsicht auf eine Ladeplattform,
- Fig. 2: eine Draufsicht auf die Ladeplattform,
- Fig. 3: einen Schnitt durch die Ladeplattform entlang der Linie A-A in Fig. 2,
- Fig. 4: einen Schnitt durch die Ladeplattform entlang der Linie F-F in Fig. 2,
- Fig. 5: ein vergrößertes Detail D aus Fig. 3,
- Fig. 6: ein vergrößertes Detail B aus Fig. 3,
- Fig. 7: ein vergrößertes Detail C aus Fig. 4.

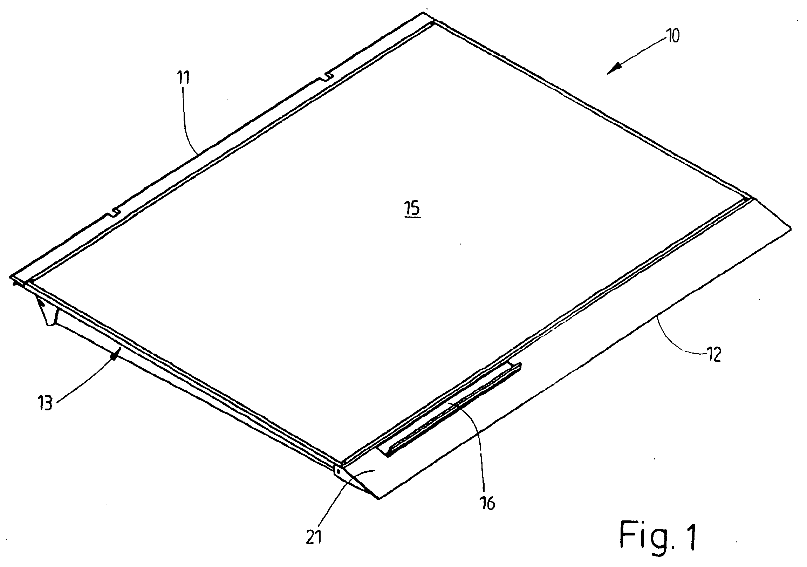

Eine Ladeplattform 10 einer Hubladebühne eines Lastkraftwagens zeigt Fig. 1. Die Ladeplattform 10 ist am Lastkraftwagen über ein Hubwerk bewegbar und schwenkbar. Lastkraftwagen und Hubwerk sind nicht gezeigt.

Das Hubwerk ist unterhalb einer Längskante 11 angeordnet. Eine Schwenkachse verläuft parallel zur Längskante 11.

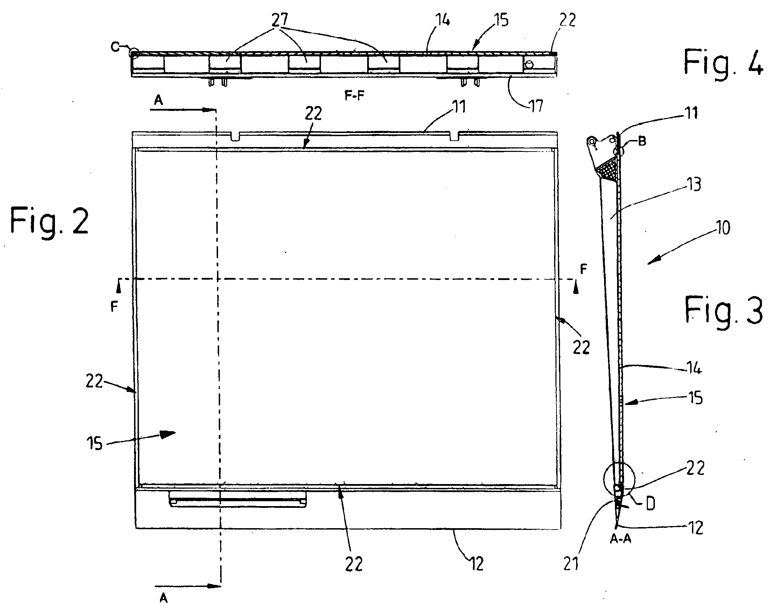

Der Längskante 11 gegenüber liegt eine freie Ladekante 12. Die Ladeplattform 10 weist ausgehend von der Längskante 11 bis zur Ladekante 12 einen im Wesentlichen keilförmigen Querschnitt auf, mit einer geringsten Dicke im Bereich der Ladekante 12, siehe insbesondere Fig. 3.

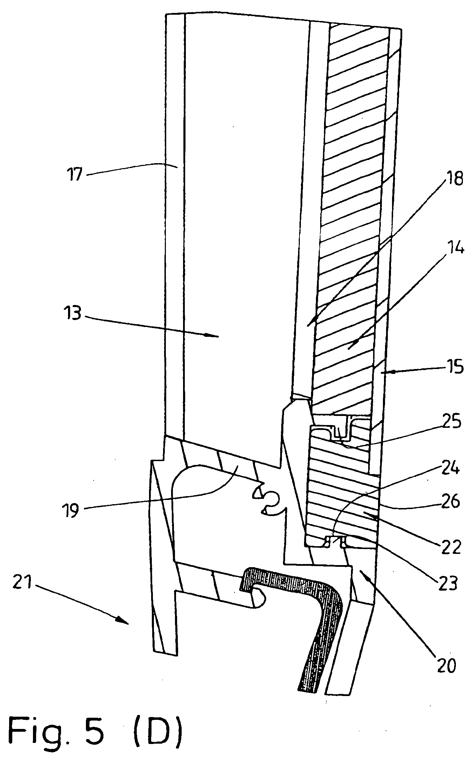

Die Ladeplattform 10 weist hier einen mehrschichtigen Aufbau auf, nämlich eine untere, im Querschnitt im Wesentlichen keilförmige Tragstruktur 13, eine darüber liegende Isolierschicht 14 und eine darüber liegende Deckschicht 15 als Lauffläche oder Arbeitsfläche, insbesondere ein Deckblech aus Aluminium oder einer Aluminiumlegierung. Der Aufbau in mehreren Schichten ergibt sich insbesondere aus Fig. 5.

Im Bereich der Ladekante 12 weist die Ladeplattform 10 eine hochklappbare Abrollsicherung 16 auf. Auf der Ladeplattform stehende Rollwagen werden dadurch während der Hubbewegung der Ladeplattform am Abrollen gehindert.

Die Tragstruktur 13 ist als räumliches Gebilde mit Bodenwand 17, Oberwand 18, unterer Seitenwand 19 und oberer Seitenwand 20 ausgebildet. Dabei erstreckt sich die obere Seitenwand 20 oberhalb der Oberwand 18. Untere Seitenwand 19 und obere Seitenwand 20 sind hier entlang der Oberwand 18 versetzt zueinander angeordnet. Beide Seitenwände 19, 20 laufen um die gesamte Tragstruktur 13 um. Im Bereich der Ladekante 12 schließt an die untere Seitenwand 19 und die obere Seitenwand 20 ein keilförmiges Endstück 21 an.

Oberwand 18 und obere umlaufende Seitenwand 20 bilden zusammen eine Wanne, in die die Isolierschicht 14 eingelegt ist. Dabei reicht die Isolierschicht 14 nicht bis an die obere Seitenwand 20 heran. Vielmehr ist ein ringförmiger umlaufender Kanal gebildet, welcher von einem Kunststoffprofil 22 als Randprofil ausgefüllt ist, siehe insbesondere Fig. 2 und 5. Das Kunststoffprofil 22 kann mit der Oberwand 18 verschraubt oder verklebt oder auf andere Weise verbunden sein. Außerdem kann eine formschlüssige Verbindung vorgesehen sein, etwa ein umlaufender Vorsprung 23 an der oberen Seitenwand, welcher in eine ebenfalls umlaufende seitliche Vertiefung 24 des Kunststoffprofils 22 eingreift.

Zwischen Kunststoffprofil 22 und Isolierschicht 24 kann ein zum Vorsprung 23 korrespondierender, in das Kunststoffprofil gerichteter Steg 25 vorgesehen sein, weicher aber deutlich unterhalb der Höhe des Kunststoffprofils bzw. der Isolierschicht 14 endet.

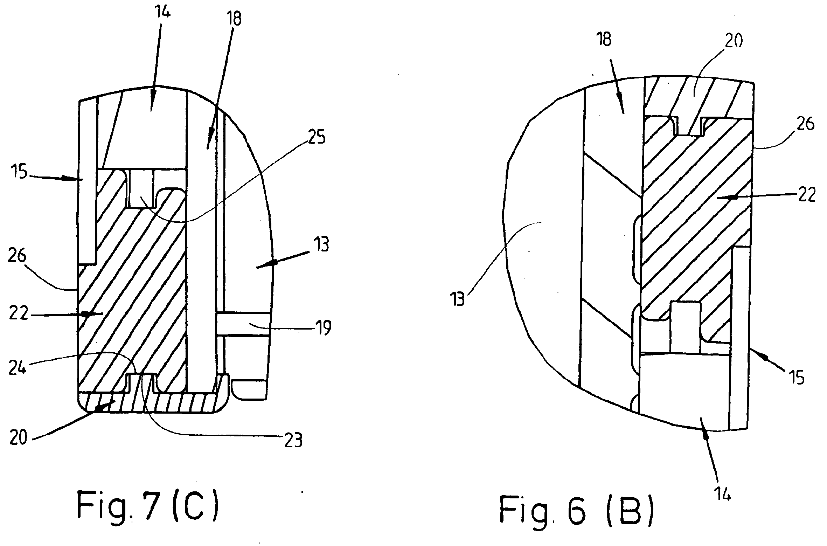

Die Deckschicht 15 erstreckt sich vollflächig über die Isolierschicht 14 hinaus und teilweise noch über das Kunststoffprofil 22. Hinsichtlich des Kunststoffprofils 22 ist eine etwa 50%ige Überlappung durch die Deckschicht 15 vorgesehen, siehe insbesondere Fig. 5 bis 7. Die Deckschicht 15 ist im Bereich der Überlappung mit dem Kunststoffprofil 22 verklebt oder verschraubt oder auf andere Weise verbunden.

Das Kunststoffprofil 22 ist aus Hartkunststoff hergestellt, beispielsweise aus Folyamidoder HDPE uno massiv ausgebildet. Demgegenüber bestehen die Wandungen der Tragstruktur aus Metall, insbesondere aus Aluminium oder einer Aluminiumlegierung. Entsprechend ist die Wärmeleitfähigkeit des Kunststoffprofils 22 deutlich geringer als die der Wandungen derTragstruktur 13.

Die Isolierschicht 14 ist aus etwa 15 mm starken Vakuumisolationspaneelen gebildet. Insbesondere ist eine einteilige oder auch mehrteilige Platte aus verfestigtem Vakuumisolationsmaterial, das von einer Umhüllung, beispielsweise einer Folie, umgeben ist, in die zuvor genannte Wanne eingelegt und bildet so eine gute Isolierung der Ladeplattform 10. Ein nicht von der Deckschicht 15 überdeckter Bereich 26 des Kunststoffprofils 22 liegt bei geschlossener Ladeplattform an einer korrespondierenden, nicht gezeigten Dichtung einer Öffnung im Laderaum eines Lastkraftwagens an. Dadurch kann Wärmeenergie die Ladeplattform nicht über metallische Bauteile passieren. Die Deckschicht 15 liegt vollständig innerhalb der Fahrzeugöffnung und der korrespondierenden Dichtung. Die Isolierwirkung der Konstruktion ist optimal. Zugleich ist die dargestellte Ladeplattform aufgrund des besonderen Werkstoffs der Isolierschicht 14 relativ dünn, obwohl die Isolierschicht auf der Tragstruktur 13 aufliegt. Das verwendete Vakuumisoliermaterial weist eine Wärmeleitfähigkeit von weniger als 0,01 W/mK, vorzugsweise etwa 0,005 W/mK oder weniger auf.

Fig. 4,zeigt den profilierten Aufbau bzw. Querschnitt der Tragstruktur 13. Erkennbar sind mit gleichen Abständen zueinander vorgesehene Rechteckprofile 27 zwischen Bodenwand 17 und Oberwand 18. Dabei erstrecken sich die Rechteckprofile 27 querzurLängskante 11 und zur Ladekante 12.

### Bezugszeichenliste:

- 10: Ladeplattform
- 11: Längskante
- 12: Ladekante
- 13: Tragstruktur
- 14: Isolierschicht
- 15: Deckschicht
- 16: Abrollsicherung
- 17: Bodenwand
- 18: Oberwand
- 19: untere Seitenwand
- 20: obere Seitenwand
- 21: Endstück
- 22: Kunststoffprofil
- 23: Vorsprung
- 24: Vertiefung
- 25: Steg
- 26: nicht bedeckter Bereich
- 27: Rechteckprofile

## Patentansprüche

1. Hubladebühne mit Ladeplattform (10), wobei die Ladeplattform (10) eine Tragstruktur (13), eine Deckschicht (15) und eine Isolierung aufweist, die eine zwischen der Tragstruktur (13) und Deckschicht (15) angeordnete Isolierschicht (14) ist, **dadurch gekennzeichnet, dass** in der Isolierschicht (14) ein Vakuumisoliermaterial vorgesehen ist, welches von einer Umhüllung umgeben ist, dass die Isolierschicht (14) umlaufend von einem Randprofil umgeben ist und dass das Randprofil eine geringere Wärmeleitfähigkeit aufweist als die Deckschicht (15) und die Tragstruktur (13).

2. Hubladebühne nach Anspruch 1, **dadurch gekennzeichnet, dass** das Randprofil aus Kunststoff besteht und/oder die Deckschicht (15) aus Metallblech besteht, insbesondere aus Aluminiumblech.

3. Hubladebühne nach Anspruch 1 oder 2, **dadurch gekennzeichnet, dass** die Deckschicht (15) die Isolierschicht (14) vollständig überdeckt und/oder die Deckschicht (15) das Randprofil nicht oder nur teilweise überdeckt.

4. Hubladebühne nach einem der Ansprüche 1 bis 3, **dadurch gekennzeichnet, dass** die Deckschicht (15) mit dem Randprofil verklebt oder verschraubt ist.

5. Hubladebühne nach einem der Ansprüche 1 bis 4, **dadurch gekennzeichnet, dass** die Tragstruktur (13) eine Wanne aufweist, in oder auf der Randprofil, Isolierschicht (14) und Deckschicht (15) liegen.

6. Hubladebühne nach einem der Ansprüche 2 bis 7, **dadurch gekennzeichnet, dass** das Randprofil zumindest einseitig formschlüssig an einer Seitenwand (20) der Tragstruktur (13) gehalten ist.

7. Hubladebühne nach einem der Ansprüche 2 bis 8, **dadurch gekennzeichnet, dass** das Randprofil außenseitig an einer umlaufenden Seitenwand (20) der Tragstruktur (13) anliegt.

8. Hubladebühne nach einem der Ansprüche 2 bis 9, **dadurch gekennzeichnet, dass** das Randprofil mit der Tragstruktur (13) verklebt oder verschraubt ist.

9. Hubladebühne nach einem der vorhergehenden Ansprüche, **dadurch gekennzeichnet, dass** sich die Isolierschicht (14) über mehr als 80% der Fläche der Ladeplattform (10) erstreckt, insbesondere über etwa 95%.

10. Hubladebühne nach einem der vorhergehenden Ansprüche, **dadurch gekennzeichnet, dass** die Tragstruktur (13) zueinander parallele Verstärkungsprofile aufweist, welche sich insbesondere quer zu einer Schwenkachse der Ladeplattform (10) erstrecken.

11. Fahrzeug mit einer Hubladebühne, die eine Ladeplattform (10) aufweist, wobei die Ladeplattform (10) eine Tragstruktur (13), eine Deckschicht (15) und eine Isolierung aufweist, die eine zwischen der Tragstruktur (13) und der Deckschicht (15) angeordnete Isolierschicht (14) ist, **dadurch gekennzeichnet, dass** in der Isoliertschicht (14) ein Vakuumisoliermaterial vorgesehen ist, welches von einer Umhüllung umgeben ist, dass die Isoliertschicht (14) umlaufend von einem Randprofil umgeben ist, dass das Randprofil eine geringere Wärmeleitfähigkeit aufweist als die Deckschicht (15) und die Tragstruktur (13) und dass eine Fahrzeugöffnung eine umlaufende Dichtung aufweist, an welcher das Randprofil bei geschlossener Ladeplattform (10) anliegt.

12. Fahrzeug nach Anspruch 13 oder 14, **gekennzeichnet durch** ein starres Gegenbrett an einem oberen Rand einer Fahrzeugöffnung und zur Anlage der geschlossenen Ladeplattform (10).

## Claims

1. Loading tailgate having a loading platform (10), wherein the loading platform (10) has a supporting structure (13), an outer layer (15) and an insulator, which is an insulating layer (14) arranged between the supporting structure (13) and the outer layer (15), **characterized in that** a vacuum insulating material is provided in the insulating layer (14), said vacuum insulating material being surrounded by a sheathing, **in that** the insulating layer (14) is surrounded peripherally by a border profile and **in that** the border profile has lower thermal conductivity than the outer layer (15) and the supporting structure (13).

2. Loading tailgate according to Claim 1, **characterized in that** the border profile consists of plastics material and/or the outer layer (15) consists of sheet metal, in particular of aluminium sheet.

3. Loading tailgate according to Claim 1 or 2, **characterized in that** the outer layer (15) completely covers the insulating layer (14) and/or the outer layer (15) does not cover or only partially covers the border profile.

4. Loading tailgate according to one of Claims 1 to 3, **characterized in that** the outer layer (15) is adhesively bonded or screwed to the border profile.

5. Loading tailgate according to one of Claims 1 to 4, **characterized in that** the supporting structure (13) has a well in or on which the border profile, insulating layer (14) and outer layer (15) are located.

6. Loading tailgate according to one of Claims 2 to 7, **characterized in that** the border profile is held, at least on one side, in a form-fitting manner against a side wall (20) of the supporting structure (13).

7. Loading tailgate according to one of Claims 2 to 8, **characterized in that** the border profile rests on the outer side against a peripheral side wall (20) of the supporting structure (13).

8. Loading tailgate according to one of Claims 2 to 9, **characterized in that** the border profile is adhesively bonded or screwed to the supporting structure (13).

9. Loading tailgate according to one of the preceding claims, **characterized in that** the insulating layer (14) extends over more than 80% of the surface area of the loading platform (10), in particular over about 95%.

10. Loading tailgate according to one of the preceding claims, **characterized in that** the supporting structure (13) has mutually parallel reinforcement profiles, which extend in particular transversely to a pivot axis of the loading platform (10).

11. Vehicle having a loading tailgate which has a loading platform (10), wherein the loading platform (10) has a supporting structure (13), an outer layer (15) and an insulator, which is an insulating layer (14) arranged between the supporting structure (13) and the outer layer (15), **characterized in that** a vacuum insulating material is provided in the insulating layer (14), said vacuum insulating material being surrounded by a sheathing, **in that** the insulating layer (14) is surrounded peripherally by a border profile, **in that** the border profile has lower thermal conductivity than the outer layer (15) and the supporting structure (13) and vehicle opening has a peripheral seal, against which the border profile rests when the loading platform (10) is closed.

12. Vehicle according to Claim 13 or 14, **characterized by** a rigid counter-board on an upper border of a vehicle opening and for the abutment of the closed loading platform (10).

## Revendications

1. Hayon élévateur doté d'une plateforme de chargement (10), la plateforme de chargement (10) comprenant une structure porteuse (13), une couche de recouvrement (15) et une isolation qui est une couche isolante (14) disposée entre la structure porteuse (13) et la couche de recouvrement (15), **caractérisé en ce qu**'un matériau d'isolation sous vide est prévu dans la couche isolante (14), lequel est entouré par une enveloppe, en ce que la couche isolante (14) est entourée sur la périphérie par un profilé de bord et en ce que le profilé de bord possède une plus faible conductibilité thermique que la couche de recouvrement (15) et la structure porteuse (13).

2. Hayon élévateur selon la revendication 1, **caractérisé en ce que** le profilé de bord est composé de plastique et/ou la couche de recouvrement (15) est composée d'une tôle en métal, en particulier d'une tôle en aluminium.

3. Hayon élévateur selon la revendication 1 ou 2, **caractérisé en ce que** la couche de recouvrement (15) recouvre complètement la couche isolante (14) et/ou la couche de recouvrement (15) ne recouvre pas le profilé de bord ou ne le recouvre que partiellement.

4. Hayon élévateur selon l'une quelconque des revendications 1 à 3, **caractérisé en ce que** la couche de recouvrement (15) est collée au profilé de bord ou est vissée sur ce dernier.

5. Hayon élévateur selon l'une quelconque des revendications 1 à 4, **caractérisé en ce que** la structure porteuse (13) comprend une cuvette dans ou sur laquelle se situent le profilé de bord, la couche isolante (14) et la couche de recouvrement (15).

6. Hayon élévateur selon l'une quelconque des revendications 2 à 7, **caractérisé en ce que** le profilé de bord est maintenu, au moins d'un côté, par coopération de formes contre une paroi latérale (20) de la structure porteuse (13).

7. Hayon élévateur selon l'une quelconque des revendications 2 à 8, **caractérisé en ce que** le profilé de bord s'applique du côté extérieur contre une paroi latérale (20) périphérique de la structure porteuse (13).

8. Hayon élévateur selon l'une quelconque des revendications 2 à 9, **caractérisé en ce que** le profilé de bord est collé à la structure porteuse (13) ou est vissé sur cette dernière.

9. Hayon élévateur selon l'une quelconque des revendications précédentes, **caractérisé en ce que** la couche isolante (14) s'étend sur plus de 80 %, en particulier sur environ 95 %, de la surface de la plateforme de chargement (10).

10. Hayon élévateur selon l'une quelconque des revendications précédentes, **caractérisé en ce que** la structure porteuse (13) comprend des profilés de renforcement parallèles les uns aux autres qui s'étendent en particulier transversalement à un axe de pivotement de la plateforme de chargement (10).

11. Véhicule doté d'un hayon élévateur qui comprend une plateforme de chargement (10), la plateforme de chargement (10) comprenant une structure porteuse (13), une couche de recouvrement (15) et une isolation qui est une couche isolante (14) disposée entre la structure porteuse (13) et la couche de recouvrement (15), **caractérisé en ce qu'**un matériau d'isolation sous vide est prévu dans la couche isolante (14), lequel est entouré par une enveloppe, **en ce que** la couche isolante (14) est entourée sur la périphérie par un profilé de bord, **en ce que** le profilé de bord possède une plus faible conductibilité thermique que la couche de recouvrement (15) et la structure porteuse (13) et **en ce qu'**une ouverture du véhicule comprend un joint d'étanchéité périphérique contre lequel s'applique le profilé de bord lorsque la plateforme de chargement (10) est fermée.

12. Véhicule selon la revendication 13 ou 14, **caractérisé par** une contre-planche rigide située sur un bord supérieur d'une ouverture du véhicule et destinée à l'appui de la plateforme de chargement (10) fermée.
